# EUROPÄISCHE PATENTANMELDUNG

(11) **EP 4 635 638 A1**
(43) Veröffentlichungstag der Anmeldung: **22.10.2025**
(21) Anmeldenummer: 25168720.8
(22) Anmeldetag: 07.04.2025
(51) Int. Cl.: B07C 1/04, B25J 15/06, B07C 5/342, B07C 5/36, B65G 47/91, G05B 19/418, B65G 47/90

(54) **VERFAHREN ZUR HANDHABUNG VON ZUMINDEST EINEM ZIELSTÜCKGUT UND VORRICHTUNG ZUR HANDHABUNG VON ZUMINDEST EINEM ZIELSTÜCKGUT**

(30) Priorität: 19.04.2024 DE 102024110999
(71) Anmelder: Körber Supply Chain Logistics GmbH, 78467 Konstanz (DE)
(72) Erfinder: Fischer, Marco, 78462 Konstanz (DE); Skrdlant, Rolf-Peter, 88662 Überlingen (DE); Eisser, Dirk-Udo, 78479 Reichenau (DE); Huber, Richard, 78467 Konstanz (DE); Schulze, Oliver, 88662 Überlingen (DE)
(74) Vertreter: Müller Schupfner & Partner Patent- und Rechtsanwaltspartnerschaft mbB (Muc)

(57) **Zusammenfassung**

Es wird ein Verfahren zur Handhabung von zumindest einem Zielstückgut (2), insbesondere bei einer Vereinzelung des zumindest einen Zielstückguts (2) aus einer Vielzahl von Stückgütern (2, 3) bereitgestellt. Das zumindest eine Zielstückgut (2) liegt direkt oder indirekt auf einer Auflagefläche (4) auf. Das Verfahren umfasst ein Verlagern des zumindest einen Zielstückguts (2) mittels einer Handhabungsvorrichtung (5). Bei dem Verlagern wirkt eine Kraft (9, 10) zwischen dem Zielstückgut (2) und der Handhabungsvorrichtung (5) sowie eine Kraft (9, 10) zwischen dem Zielstückgut und der Auflagefläche (4). Ferner wird eine Vorrichtung (1) zur Handhabung von zumindest einem Zielstückgut (2), insbesondere bei einer Vereinzelung des zumindest einen Zielstückguts (2) aus einer Vielzahl von Stückgütern (2, 3), bereitgestellt.

## Beschreibung

Die vorliegende Erfindung betrifft ein Verfahren zur Handhabung von zumindest einem Zielstückgut, insbesondere bei einer Vereinzelung des zumindest einen Zielstückguts aus einer Vielzahl von Stückgütern und eine Vorrichtung zur Handhabung von zumindest einem Zielstückgut, insbesondere bei einer Vereinzelung des zumindest einen Zielstückguts aus einer Vielzahl von Stückgütern.

Stückgüter, insbesondere verschiedene Arten von Poststücken oder Postsendungen, sind bei einer Verarbeitung, beispielsweise bei einem Transport für eine anschließende Sortierung, oft als Bulk, d.h. als ein 2D- oder 3D-Haufen angeordnet. Für die Sortierung stellt dies ein Problem dar, denn diese Stückgüter müssen hierfür typischerweise vereinzelt werden, um zum einen bestimmte Stückgutinformationen lesen und zuordnen zu können, und zum anderen, um die Stückgüter für eine Weiterverarbeitung einzeln handhaben zu können. Hierbei ist es bekannt, die Stückgüter durch manuelle Handhabung zu vereinzeln. Dies erfordert jedoch einen erheblichen personellen Aufwand und ist oft zeitaufwendig. Maschinell ist ein individuelles Herauslösen von Stückgütern aus der Vielzahl von Stückgütern oft schwierig und führt zu Beschädigungen der Stückgüter. Insbesondere bei schweren Stückgütern und Stückgütern mit wenig belastungsfähiger Verpackung ist es eine Herausforderung, diese maschinell von den anderen Stückgütern zu trennen. Beispielsweise ist es hierbei bekannt, mittels Vakuum an einer Oberseite des Stückguts anzugreifen und das Stückgut anzusaugen und entgegen der Schwererichtung anzuheben. Hierbei ist es jedoch problematisch, wenn das Stückgut besonders schwer ist oder in einer nur sehr geringen belastungsfähigen bzw. reißfesten Verpackung angeordnet ist. Daher kann es bei einer maschinellen Handhabung der Stückgüter oft zu Beschädigungen derselben kommen.

Maschinelle Abfertigungsanlagen aus dem Stand der Technik sind oft kompliziert und brauchen viel Bauraum (beispielsweise Schrägrollenförderer mit einem anschließenden Singulierer).

Daher ist es eine Aufgabe der vorliegenden Erfindung, eine Lösung für das maschinelle Handhaben eines Stückguts bereitzustellen, die weniger kompliziert ist, und platzsparend angeordnet werden kann.

Dieses Problem wird mit einem Verfahren mit den Merkmalen des Anspruchs 1 sowie mit einer Vorrichtung mit den Merkmalen des Anspruchs 15 gelöst.

Gemäß einem Aspekt der vorliegenden Erfindung wird ein Verfahren zur Handhabung von zumindest einem Zielstückgut, insbesondere bei einer Vereinzelung des zumindest einen Zielstückguts aus einer Vielzahl von Stückgütern bereitgestellt. Das zumindest eine Zielstückgut liegt vorzugsweise direkt oder indirekt auf einer Auflagefläche auf. Das Verfahren kann ein Verlagern des zumindest einen Zielstückguts mittels einer Handhabungsvorrichtung umfassen. Bei dem Verlagern wirkt vorzugsweise eine Kraft zwischen dem Zielstückgut und der Handhabungsvorrichtung sowie eine Kraft zwischen dem Zielstückgut und der Auflagefläche.

Gegenüber dem bekannten Stand der Technik liefert die vorliegende Erfindung den Vorteil, dass das Stückgut, welches bewegt wird, während der Bewegung nach wie vor in Kontakt mit der Auflagefläche ist. Dadurch ist es nicht notwendig, dass das Zielstückgut vollständig durch die Handhabungsvorrichtung anzuheben. Damit kann des Zielstückguts zumindest einen Teil seiner Masse über die Auflagefläche abtragen. Daher kann eine Kraft zwischen Zielstückgut und Handhabungsvorrichtung reduziert sein. Dadurch können Beschädigung des Zielstückguts verhindert werden. Zielstückgüter müssen zur Vereinzelung aus einem Bulk von Stückgütern herausgelöst werden. Um nicht die Schwerkraft überwinden und für das Anheben des Zielstückguts entsprechend fest greifen zu müssen, kann das Herauslösen von Zielstückgütern aus dem Bulk durch horizontales Verschieben in einer Ebene erfolgen. Damit kann verhindert werden, dass eine Verpackung des Zielstückguts oder das Zielstückgut selbst durch zu festes Greifen der Handhabungsvorrichtung zerstört oder beschädigt wird. Ferner ist ein geringerer Energieaufwand notwendig, um die Handhabungsvorrichtung zu betreiben, da diese nicht die gesamte Gewichtskraft des Zielstückguts überwinden muss, um dieses zu handhaben.

Eine Vereinzelung kann eine Umwandlung einer zweidimensionalen oder dreidimensionalen Anordnung von Stückgütern in eine eindimensionale Anordnung der Stückgüter sein. Die zu vereinzelnde Stückgüter können in Ruhe oder in Bewegung sein. Das zumindest eine Stückgut, das vereinzelt werden soll, kann also so bewegt werden, dass es aus einer Menge von Stückgütern herausgelöst wird. Das Stückgut, welches gehandhabt werden soll, kann auch als Zielstückgut bezeichnet sein. Ferner kann die Vereinzelung auch ein punktgenaues Platzieren oder Positionieren eines Stückguts sein. So ist eine Vereinzelung beispielsweise vor einem Aufbringen eines Stückguts auf einem Sorter notwendig. Ferner kann eine Vereinzelung notwendig sein, wenn ein Stückgut individuell erkannt und/oder gehandhabt werden soll. Das Stückgut kann eine Postsendung oder Poststück wie beispielsweise ein Päckchen, ein Paket, ein Small, ein Polybag, eine Versandrolle, eine Versandtasche oder dergleichen sein. Ein Stückgut kann eine Vielzahl von unterschiedlichen Außenformen aufweisen. Ferner können Stückgüter unterschiedlichste äußere Verpackungen aufweisen, sodass es schwierig ist, ein Stückgut immer optimal entsprechend seiner Anforderungen zu handhaben. Die Auflagefläche kann eine Oberfläche sein, auf der ein oder mehrere Stückgüter aufliegen. Die Auflagefläche kann hierbei ein Sammelpunkt sein, an dem Stückgüter gesammelt werden. Die Auflagefläche kann beispielsweise eine im Wesentlichen horizontale Ebene sein, die an einem Entladepunkt, einem Ende einer Rutsche, am Ende eines Förderbands oder dergleichen vorgesehen ist. In direktem Kontakt kann ein Stückgut mit der Auflagefläche sein, wenn es die Auflagefläche direkt (d.h. unmittelbar) kontaktiert. Ein indirekter Kontakt kann vorliegen, wenn das Stückgut beispielsweise auf einem anderen Stückgut aufliegt, welches wiederum auf der Auflagefläche aufliegt. Somit kann das Stückgut auch indirekt auf der Auflagefläche (d.h. mittelbar) aufliegen. In jedem Fall kann das Stückgut zumindest einen Teil seiner Gewichtskraft (d.h. die aus der Masse des Stückguts zusammen mit der Erdbeschleunigung resultierende Kraft) in die Auflagefläche einleiten. Diese Einleitung kann unmittelbar oder mittelbar über andere Stückgüter oder andere Gegenstände geschehen. Das Verlagern des zumindest einen Stückguts kann eine Umpositionierung und/oder Umorientierung des Zielstückguts sein. Dadurch kann das Zielstückgut von anderen Stückgütern getrennt werden. Trennen kann hierbei bedeuten, dass das Zielstückgut von anderen Stückgütern beabstandet wird. Die Handhabungsvorrichtung kann eine Vorrichtung sein, die dazu ausgestaltet ist, ein Stückgut zu manipulieren. Vorzugsweise ist die Handhabungsvorrichtung eine Greifvorrichtung, die ein Stückgut so greifen kann, dass sie das Stückgut verlagern kann. Zusätzliche oder alternativ kann die Greifvorrichtung eine Vorrichtung sein, die das Stückgut verschieben kann. Bei der Verlagerung des Zielstückguts durch die Handhabungsvorrichtung kann eine erste Kraft zwischen der Handhabungsvorrichtung und dem Zielstückgut wirken und ein zweite Kraft zwischen dem Zielstückgut und der Auflagefläche. Beide Kräfte können ungleich Null sein. Wird das Zielstückgut beispielsweise durch eine Handhabungsvorrichtung lediglich angehoben, so herrscht ausschließlich eine einzelne Kraft, nämlich zwischen dem Zielstückgut und der Handhabungsvorrichtung. Dadurch, dass gemäß einem Aspekt der vorliegenden Erfindung zwei Kräfte, nämlich zwischen dem Zielstückgut und der Handhabungsvorrichtung sowie zwischen dem Zielstückgut in der Auflagefläche herrschen, ist es nicht notwendig, dass die Kraft, die zwischen dem Zielstückgut und der Handhabungsvorrichtung herrscht, übermäßig groß ist. Dadurch kann diese Kraft so gewählt werden, dass eine Beschädigung des Zielstückguts während der Verlagerung vermieden wird. Mit anderen Worten kann die Handhabungsvorrichtung das Zielstückgut bei einer Verlagerung des Zielstückguts auf der Auflagefläche verschieben. Dabei muss das Zielstückgut nicht direkt auf der Auflagefläche aufliegen. Vielmehr ist es ausreichend, dass eine Kraft zwischen dem Zielstückgut und der Auflagefläche herrscht, wobei diese Kraft ungleich 0 ist. Damit kann beispielsweise eine Gewichtskraft des Zielstückguts zumindest teilweise über die Auflagefläche abgetragen werden. Dies muss nicht direkt und unmittelbar in die Auflagefläche eingetragen werden, sondern kann auch mittelbar beispielsweise über ein anderes Stückgut oder andere Vorrichtungen in die Auflagefläche eingetragen werden. Wichtig ist lediglich, dass auf das Zielstückgut an zwei voneinander beabstandeten Punkten jeweils eine Kraft wirkt. Damit kann eine Kraftspitze einer einzelnen Kraft vermieden werden und somit eine Beschädigung des Zielstückguts verhindert werden. Ferner kann dadurch die Effizienz der Verlagerung des Zielstückguts gesteigert werden.

Vorzugsweise umfasst das Verfahren ferner ein Erfassen oder Erlangen von zumindest einer Stückgutinformation des Zielstückguts. Vorzugsweise umfasst das Verfahren ferner ein Erfassen oder Erlangen von zumindest einer Stückgutinformation des Zielstückguts und Identifizieren des zumindest einen Zielstückguts, welches verlagert werden soll, basierend auf der zumindest einen Stückgutinformation. Die zumindest eine Stückgutinformation kann indikativ für eine Eigenschaft des Zielstückguts sein. Ferner kann die zumindest eine Stückgutinformation auch Informationen über eine Lage, Anordnung, Orientierung der angrenzende Stückgüter umfassen. Mit anderen Worten kann das Zielstückgut von einer Vielzahl von anderen Stückgütern umlagert sein, wobei dieser Umstand in der zumindest einen Stückgutinformation des Zielstückguts umfasst sein kann. Eine Eigenschaft des Zielstückguts kann beispielsweise eine Masse des Zielstückguts, eine äußere Form des Zielstückguts, eine Beschaffenheit der Oberfläche des Zielstückguts oder dergleichen sein. Die zumindest eine Stückgutinformation kann erfasst werden, wobei das Erfassen vorzugsweise unmittelbar vor dem Verlagern geschehen kann. Das Erfassen kann beispielsweise durch eine Sensoreinrichtung realisiert sein. Mit anderen Worten kann das Erfassen bedeuten, dass die zumindest eine Stückgutinformation individuell für das zu verlagernde Zielstückgut erfasst (d.h. bestimmt) wird. Ferner kann die zumindest eine Stückgutinformation auch erlangt werden. Mit anderen Worten kann in diesem Fall die Stückgutinformation nicht erfasst werden, sondern von einer anderen Einrichtung erlangt (z.B. übergeben) werden. Dies ist beispielsweise dann vorteilhaft, wenn das Stückgut bereits vor der Handhabung durch ein anderes Handhabungssystem manipuliert wurde, wobei hierbei die zumindest eine Stückgutinformation aufgenommen worden ist. Somit kann bei dem vorliegenden Verfahren zur Handhabung ein erneutes Erfassen der zumindest einen Stückgutinformation vermieden werden, und demgegenüber auf bereits vorhandene Daten (d.h. Stückgutinformationen) zurückgegriffen werden. Dadurch kann das Verfahren zur Handhabung vereinfacht und beschleunigt werden.

Vorzugsweise umfasst das Verfahren ferner ein Identifizieren des zumindest einen Zielstückguts, welches verlagert werden soll. Sind eine Vielzahl von Stückgütern zur Verfügung gestellt, so kann aus der Vielzahl von Stückgütern ein Zielstückgut identifiziert werden. Das Zielstückgut kann dann dasjenige Stückgut sein, welches als nächstes verlagert werden soll. Vorzugsweise ist ein solches Stückgut so positioniert, dass es problemlos verlagert werden kann. Der Schritt des Identifizierens kann beispielsweise ein Identifizieren der Lage des Zielstückguts umfassen. Liegt ein Stückgut beispielsweise am Rand eines Haufens von Stückgütern kann dieses Stückgut als Zielstückgut identifiziert werden, da es problemlos verlagerbar ist. Ferner können Stückgüter, welche oben (in der Schwererichtung) liegen, als Zielstückgüter identifiziert werden, da diese ohne Probleme gegriffen und damit verlagert werden können.

Vorzugsweise umfasst die zumindest eine Stückgutinformation eine Form des Zielstückguts, eine Lage des Zielstückguts, eine Anordnung von an das Zielstückgut angrenzender Stückgüter, eine Masse des Zielstückguts, eine Beschaffenheit des Zielstückguts und/oder einen Abstand des Zielstückguts von der Auflagefläche. Die Form des Zielstückguts kann beispielsweise indikativ für eine geometrische Form des Zielstückguts sein. Das Zielstückgut kann beispielsweise eine rechteckige, zylindrische oder sonst geartete Geometrie aufweisen. Durch die Stückgutinformation kann damit bestimmt werden, wie und/oder wo das Zielstückgut am besten zu kontaktieren ist, um die Verlagerung zu realisieren. Die Lage des Zielstückguts kann indikativ für eine Orientierung des Zielstückguts im Raum sein. Die Anordnung von an das Zielstückgut angrenzender Stückgüter kann indikativ dafür sein, ob das Zielstückgut ohne weiteres verlagert werden kann oder ob das Zielstückgut durch eines oder mehrere andere Stückgüter blockiert ist. Die Masse des Zielstückguts kann indikativ für ein Gewicht des Zielstückguts sein. Die Beschaffenheit des Zielstückguts kann indikativ für eine äußere Beschaffenheit des Zielstückguts sein. Beispielsweise kann die Beschaffenheit indikativ für ein Material sein, welches das Zielstückgut umgibt. Dadurch können Rückschlüsse darauf gezogen werden, wie das Zielstückgut verlagert werden kann. So kann das Material beispielsweise einen Einfluss darauf haben mit welche Greifgraft das Stückgut gegriffen werden kann. Zum Beispiel spielt die Luftdurchlässigkeit einer Verpackung des Zielstückguts eine Rolle, wenn dieses mittels Unterdrucksauger gegriffen wird. Damit kann das Verlagern des Stückguts in Abhängigkeit der Stückgutinformation erfolgen. Beispielsweise kann bei einem besonders schweren Stückgut die Handhabungsvorrichtung das Stückgut nur soweit von der Auflagefläche anheben, dass eine Reibung zwischen Stückgut und Auflagefläche so reduziert ist, dass das Stückgut keinen Schaden nimmt. Dadurch kann jedes Stückgut individuell gehandhabt werden. Insgesamt besteht so die Möglichkeit eine an die Stückgüter angepasste Handhabung vorzusehen.

Vorzugsweise wird mehr als ein Zielstückgut identifiziert. Vorzugsweise wird bei dem Verlagern mehr als ein Zielstückgut mit der Handhabungsvorrichtung verlagert. Dadurch kann die Effizienz gesteigert werden, da beispielsweise mehrere Zielstückgüter gleichzeitig verlagert werden können. Es ist denkbar, dass Zielstückgüter zu einem Förderband geschoben werden und nacheinander abtransportiert werden können. So können durch die Handhabungsvorrichtung mehrere Zielstückgüter gehandhabt (d.h. verlagert) werden und dennoch eine Vereinzelung der Stückgüter erreicht werden.

Vorzugsweise wird die Verlagerung basierend auf der zumindest einen Stückgutinformation ausgeführt. Mit anderen Worten kann die Verlagerung des Zielstückguts auch angepasst auf Eigenschaften des Zielstückguts realisiert sein. Dadurch kann die Verlagerung besonders schonend ausgeführt werden. Beispielsweise kann eine Beschleunigung bei der Verlagerung des Zielstückguts angepasst sein. So kann ein kompaktes und festes Zielstückgut (z.B. ein Päckchen) schneller verlagert werden als beispielsweise ein flexibles und verformbares Zielstückgut (z.B. ein Polybag). Durch diese angepasste Handhabung kann der Durchsatz erhöht werden.

Vorzugsweise wird das Identifizieren des Zielstückguts basierend auf einer Position und/oder Orientierung des Zielstückguts auf der Auflagefläche durchgeführt. Vorzugsweise umfasst das Verfahren ein Identifizieren des zumindest einen Zielstückguts, welches verlagert werden soll, basierend auf der zumindest einen Stückgutinformation. Beispielsweise kann es eine Rolle spielen, wo das Stückgut auf der Auflagefläche liegt. Liegt das Stückgut beispielsweise besonders nahe an einem Ziel (z.B. einem Sorter oder Ausgabeort) für das Stückgut, kann dieses Stückgut als Zielstückgut identifiziert werden, da eine Verlagerung minimiert ist. Dadurch kann die Verlagerung sehr effizient vonstattengehen.

Vorzugsweise umfasst das Verfahren ferner ein Freilegen des Zielstückguts aus der Vielzahl von Stückgütern. So kann es beispielsweise vorkommen, dass ein Zielstückgut, welches als nächstes verlagert werden soll, so von anderen Stückgütern umgeben ist, dass das Zielstückgut nicht ohne weiteres durch die Handhabungsvorrichtung verlagert werden kann. In einem solchen Fall können zunächst die Stückgüter, welche das Zielstückgut umgeben und damit blockieren, verlagert werden. Bei dieser Verlagerung kann es sich dann um eine Verlagerung handeln, die lediglich einen gewissen Bereich freigelegt, sodass das Zielstückgut ohne weiteres durch die Handhabungsvorrichtung verlagert werden kann. Vorstellbar ist es, dass das Zielstückgut unter einer Vielzahl von anderen Stückgütern begraben ist, und dass die Handhabungsvorrichtung vor dem Verlagern des Zielstückguts die anderen Stückgüter wegräumt, sodass die Handhabungsvorrichtung problemlos das Zielstückgut erreichen kann. Dadurch ist es möglich, ein gewünschtes bzw. individuell bestimmtes Zielstückgut auch aus einem Bulk von Stückgütern heraus zu verlagern. Das Verlagern von zumindest einem Stückgut im Rahmen der Freilegung kann analog zu dem Verlagern des Zielstückguts durchgeführt werden. Dadurch kann auch diese Verlagern effizient realisiert werden. Im Folgenden wird hinsichtlich einer Verlagerung meist auf die Verlagerung des Zielstückguts eingegangen, dasselbe gilt aber analog auch für eine Verlagerung von anderen Stückgütern der Vielzahl von Stückgütern.

Vorzugsweise ist das Verlagern ein physisches Verlagern. Mit anderen Worten kann bei dem Verlagern ein Stückgut von einer ersten Position zu einer zweiten Position bewegt werden, wobei die erste Position ungleich der zweiten Position ist. Bei dem physischen Verlagern kann es sich um eine räumliche Positionsänderung handeln.

Vorzugsweise umfasst das Verlagern ein Schieben und/oder ein Drücken des zumindest einen Zielstückguts. Die Handhabungsvorrichtung kann somit dazu ausgestaltet sein, das Zielstückgut in eine gewünschte Richtung zu verlagern, indem die Handhabungsvorrichtung das Zielstückgut kontaktiert und verschiebt. In diesem Fall muss die Handhabungsvorrichtung das Zielstückgut nicht greifen. Dadurch kann eine Beschädigung des Zielstückguts verhindert werden. Beispielsweise können so sehr fragile Stückgüter problemlos gehandhabt werden. Darüber hinaus kann die Handhabungsvorrichtung besonders einfach ausgestaltet sein, da diese lediglich das Zielstückgut verschieben können muss.

Vorzugsweise wird die Verlagerung im Wesentlichen orthogonal zu der Schwererichtung ausgeführt. Mit anderen Worten kann das Zielstückgut in einem Winkel von im Wesentlichen 90° (± 10°) zu der Schwererichtung über die Auflagefläche verlagert werden. Dadurch kann sichergestellt sein, dass eine Gewichtskraft, welche das Stückgut in der Schwererichtung auf einen Untergrund (d.h. die Auflagefläche) ausübt, zufriedenstellend durch die Auflagefläche abgetragen wird. Dadurch kann die Kraft, die zwischen Zielstückgut und Handhabungsvorrichtung herrscht, verringert werden.

Vorzugsweise ist das zumindest eine Zielstückgut während der Verlagerung zumindest in indirektem Kontakt mit der Auflagefläche. Mit anderen Worten muss das Zielstückgut nicht direkt mit der Auflagefläche kontaktiert sein, sondern kann indirekt über beispielsweise andere Stückgüter oder andere Einrichtungen wie Rutschen, Rampen oder dergleichen mit der Auflagefläche in Kontakt stehen. Wichtig ist, dass das Zielstückgut beispielsweise eine Gewichtskraft in die Auflagefläche einleiten kann. Damit kann sichergestellt sein, dass eine Kraft zwischen Zielstückgut und der Handhabungsvorrichtung minimiert ist. Jedoch wird das Zielstückgut nicht durch eine Transportvorrichtung oder dergleichen über die Auflagefläche transportiert.

Vorzugsweise wird das Zielstückgut während der Verlagerung parallel zu der Auflagefläche bewegt. In diesem Fall kann die Auflagefläche im Wesentlichen orthogonal zu der Schwererichtung ausgerichtet sein. Damit kann sichergestellt sein, dass eine Gewichtskraft, welche das Zielstückgut in der Schwererichtung ausübt, durch die Auflagefläche abgetragen wird.

Vorzugsweise ist die Auflagefläche als eine ebene Fläche ausgestaltet. Eben kann in diesem Zusammenhang bedeuten, dass die Auflagefläche eine konstante Oberfläche (d.h. ohne Vertiefungen) ausgestaltet ist. Vorzugsweise ist die Auflagefläche orthogonal zu der Schwererichtung ausgerichtet. Vorzugsweise ist die Auflagefläche in der Horizontalen orientiert. Dadurch kann sichergestellt sein, dass eine Gewichtskraft, welche des Zielstückgut ausübt, zufriedenstellend in die Auflagefläche eingebracht werden kann.

Vorzugsweise ist die Auflagefläche als ein Rollentisch ausgestaltet. Der Rollentisch kann eine Vielzahl von Rollen aufweisen, mit denen die darauf befindlichen Stückgüter in Kontakt sind. Dadurch kann eine Reibung zwischen der Auflagefläche und dem Zielstückgut, während einer Verlagerung des Zielstückguts, minimiert sein. Dadurch kann die Kraft, welche auf das Zielstückgut wirkt, weiter reduziert sein, wodurch Beschädigungen des Zielstückguts vermieden werden können. Mit anderen Worten kann eine Reibung zwischen Zielstückgut und der Auflagefläche reduziert sein.

Vorzugsweise wird das zumindest eine Zielstückgut durch die Verlagerung in einen Stückgutstrom eingelagert. Ein Stückgutstrom kann hierbei beispielsweise ein Strom von Stückgütern auf einem Sorter sein. So kann das vorliegende Verfahren beispielsweise vor einer Highspeed-Injection angeordnet sein. Dadurch kann ein Stückgut der Highspeed-Injection einzeln (d.h. vereinzelt oder singuliert) zugeführt werden, sodass die Highspeed-Injection das Stückgut problemlos auf den Sorter aufschießen kann. Ferner kann der Stückgutstrom auch ein beliebiger anderer Stückgutstrom (vorzugsweise bereits vereinzelter Stückgutstrom) sein, in den das Zielstückgut eingebracht werden soll. Genauer gesagt ist es denkbar, dass das Zielstückgut, welches durch das vorliegende Verfahren vereinzelt wird, anschließend in jedes beliebige Handhabungsverfahren zugeführt werden kann, bei dem das Vorliegen eines vereinzelten Stückguts wichtig ist.

Vorzugsweise ist das zumindest eine Stückgut in einem Bulk von Stückgütern angeordnet. Ein Bulk von Stückgütern kann beispielsweise eine Schüttung von Stückgütern sein. So ist es denkbar, dass dem Verfahren eine Vielzahl von Stückgütern als Bulk zugeführt wird. Ein Bulk entsteht beispielsweise dadurch, dass eine Ladung von Stückgütern auf eine Auflagefläche gekippt wird. Dadurch kann ein zweidimensionaler Haufen oder dreidimensionaler Haufen entstehen. Das vorliegende Verfahren ist dann in der Lage, durch ein Verlagern von Zielstückgütern die Stückgüter zu vereinzeln.

Vorzugsweise ist das zumindest eine Zielstückgut vor der Verlagerung in Ruhe. Mit anderen Worten kann die Vielzahl von Stückgütern, die durch das vorliegende Verfahren vereinzelt werden sollen, in einer stationären Anordnung vorliegen. Mit anderen Worten kann die Handhabungsvorrichtung das zumindest eine Zielstückgut aus einem geschütteten Haufen von Stückgütern weg verlagern.

Vorzugsweise ist das zumindest eine Zielstückgut während der Verlagerung durch einen Reibschluss und/oder einen Formschluss gehalten. Ein Formschluss kann vorliegen, wenn das Zielstückgut durch die Handhabungsvorrichtung geschoben wird. Dadurch kann ein Ausweichen des Zielstückguts weg von der Handhabungsvorrichtung verhindert werden. Eine reibschlüssige Verbindung oder eine kraftschlüssige Verbindung kann zwischen dem Zielstückgut und der Handhabungsvorrichtung dann auftreten, wenn eine Haftreibung zwischen dem Zielstückgut und der Handhabungsvorrichtung größer ist als eine Haftreibung zwischen dem Zielstückgut und einem Untergrund, auf welchem das Zielstückgut liegt (z.B. die Auflagefläche). Dadurch kann verhindert werden, dass eine übermäßige, punktuelle Kraft durch die Handhabungsvorrichtung auf das Zielstückgut einwirkt, sodass eine Beschädigung des Zielstückguts noch zuverlässiger verhindert werden kann.

Vorzugsweise wirkt während der Verlagerung eine Druckkraft oder eine Zugkraft ausschließlich von einer Seite auf das Zielstückgut ein. Mit anderen Worten kann das Zielstückgut entweder geschoben oder gezogen werden. Somit ist es nicht notwendig, das Zielstückgut zu greifen oder auf andere Art und Weise zu fassen. Dadurch kann eine Beschädigung des Zielstückguts vermieden werden.

Vorzugsweise ist das Erfassen der zumindest einen Stückgutinformation durch ein Erkennungssystem realisiert. Das Erkennungssystem kann ein Vision-System sein, das optisch Informationen aufnimmt. Die aufgenommenen Informationen können dann verarbeitet werden, um die zumindest eine Stückgutinformation zu erlangen. Vorzugsweise kann es sich bei dem Erkennungssystem um optische Sensoren handeln, die Bildinformationen über ein Stückgut aufnehmen können und basierend darauf die zumindest eine Stückgutinformation bestimmen können.

Vorzugsweise ist das Erkennungssystem schräg oberhalb des Zielstückguts angeordnet. Mit anderen Worten kann das Erkennungssystem von schräg oberhalb (d.h. in einer ISO-Ansicht) auf das zumindest eine Stückgut und/oder die Auflagefläche gerichtet sein. Dadurch kann sichergestellt sein, dass auch eine dreidimensionale Anordnung, Orientierung und/oder Lage von dem zumindest einem Stückgut zufriedenstellend durch das Erkennungssystem erkannt werden kann.

Vorzugsweise wird das Zielstückgut während der Verlagerung durch eine mechanische oder pneumatische Kraft gehalten. Eine mechanische Kraft kann beispielsweise durch Greifelemente auf das Zielstückgut ausgeübt werden. Dadurch kann das Zielstückgut besonders sicher gehalten sein. Ein mechanisches Greifelement kann beispielsweise ein zangenartiges Funktionsende der Handhabungsvorrichtung sein. Eine pneumatische Kraft kann beispielsweise durch einen Unterdrucksauger auf das Zielstückgut ausgeübt werden, um dieses zu greifen.

Vorzugsweise umfasst die Handhabungsvorrichtung einen Roboterarm. Der Roboterarm kann als ein Manipulator ausgestaltet sein. Vorzugsweise besitzt der Roboterarm vier Achsen und vier Freiheitsgrade. Sämtliche Achsen können als serielle Kinematik ausgeführt sein. Mit anderen Worten kann ein Koordinatenursprung einer folgenden Achse abhängig von einer Position der vorhergehenden sein. Dadurch kann eine beliebige Position im Raum durch den Roboterarm angefahren werden. Mit anderen kann das Zielstückgut problemlos angefahren werden und anschließend verlagert werden. Dies ist selbst dann möglich, wenn das Zielstückgut entweder durch andere Stückgüter umgeben ist oder andere Hindernisse im Weg sind.

Gemäß einem weiteren Aspekt der vorliegenden Erfindung wird eine Vorrichtung zur Handhabung von zumindest einem Zielstückgut, insbesondere bei einer Vereinzelung des zumindest einen Zielstückguts aus einer Vielzahl von Stückgütern bereitgestellt. Das zumindest eine Zielstückgut liegt direkt oder indirekt auf einer Auflagefläche auf. Vorzugsweise umfasst die Vorrichtung eine Handhabungsvorrichtung, die dazu ausgestaltet ist, ein Stückgut zu verlagern. Vorzugsweise umfasst die Vorrichtung eine Steuereinheit, die dazu ausgestaltet ist, die Handhabungsvorrichtung so zu steuern, dass das Zielstückgut so verlagert wird, dass eine Kraft zwischen dem Zielstückgut der Handhabungsvorrichtung sowie eine Kraft zwischen dem Zielstückgut und der Auflagefläche wirkt. Die Vorrichtung kann vorzugsweise stromaufwärts einer Sortiereinrichtung angeordnet sein. Dadurch kann sichergestellt sein, dass Stückgüter nur vereinzelt der Sortiereinrichtung zugeführt werden. Die Vorrichtung kann ferner die Auflagefläche umfassen. Die Auflagefläche ist vorzugsweise so ausgestaltet, dass sie einen geringen Reibwert zwischen einem Stückgut und der Oberfläche der Auflagefläche aufweist. Dadurch kann verhindert werden, dass, wenn Stückgüter über die Auflagefläche bewegt werden, hohe Reibkräfte zwischen Stückgut und Auflagefläche auftreten, und es dadurch zu Beschädigungen bei dem Stückgut kommen kann.

Vorzugsweise umfasst die Handhabungsvorrichtung zumindest eine Greifvorrichtung, insbesondere zumindest einen Saugnapf. Der Saugnapf kann mit Unterdruck beaufschlagt werden, um ein Stückgut anzusaugen und zu halten. Ferner ist denkbar, dass die Greifvorrichtung auch als mechanische Greifvorrichtung ausgestaltet sein kann. So kann die mechanische Greifvorrichtung beispielsweise eine zangenartige Vorrichtung sein, die dazu ausgestaltet ist, Stückgüter einzeln oder gemeinsam zu greifen.

Vorzugsweise umfasst die Handhabungsvorrichtung einen Druckabschnitt, der dazu ausgestaltet ist, eine Druckkraft auf ein Stückgut auszuüben. Der Druckabschnitt kann eine Fläche umfassen, die ein zu verlagerndes Stückgut kontaktieren kann. Der Druckabschnitt kann schieberartig ausgestaltet sein, so dass ein Stückgut mit dem Druckabschnitt verschoben werden kann. Der Druckabschnitt kann dazu ausgestaltet sein, ausschließlich eine Druckkraft auf ein Stückgut auszuüben. Mit anderen Worten kann der Druckabschnitt keine andere Kraft auf ein Stückgut ausüben als eine Druckkraft. Damit kann auf einfache Art und Weise ein Stückgut verlagert werden.

Vorzugsweise umfasst die Handhabungsvorrichtung zumindest ein vorstehendes Element, das mit dem Stückgut in Kontakt gelangen kann. Das vorstehende Element kann beispielsweise ein Vorsprung sein, der zumindest ein Stückgut kontaktieren kann. Es ist beispielsweise denkbar, dass das vorstehende Element als ein stiftartiger Vorsprung ausgestaltet ist. Somit können Stückgüter, die in einer zweidimensionalen oder dreidimensionalen Anordnung vorliegen, zielgerichtet aus einer solchen Anordnung entnommen werden (z.B. herausgeschoben werden). So kann beispielsweise ein Zielstückgut, welches von einer Vielzahl anderer Stückgüter umgeben ist, gezielt durch das vorstehende Element hervorgeschoben werden, um es beispielsweise weiter zu verlagern oder um es greifen zu können. Damit kann ein Zielstückgut effizient aus einer Bulkanordnung entnommen werden.

Vorzugsweise sind eine Vielzahl von vorstehenden Elementen vorgesehen, die so ausgestaltet sind, das sie relativ zueinander bewegbar sind. Mit anderen Worten können die vorstehenden Elemente dabei so ausgestaltet und vorgesehen werden, dass sie zu dem jeweils zu verlagernden Zielstückgut passen. Ist das Zielstückgut beispielsweise sehr klein (d.h. hat eine sehr kleine Oberfläche) kann lediglich ein vorstehendes Element genutzt werden, um dieses Zielstückgut zu kontaktieren. Ist das Zielstückgut dem gegenüber größer (d.h. weist eine größere Oberfläche auf) können mehrere vorstehende Elemente genutzt werden, um das Zielstückgut zu verlagern. Somit kann sichergestellt sein, dass ein kleines Zielstückgut zufriedenstellend kontaktiert werden kann und ein großes Zielstückgut nicht durch ein einzelnes vorstehendes Element beschädigt wird.

Vorzugsweise kann jedes vorstehende Element teleskopartig bewegt werden. Mit anderen Worten kann das zumindest eine vorstehende Element vor- und zurückbewegt werden. Dabei kann teleskopartig bedeuten, dass das zumindest eine teleskopartige Element in einem eingefahrenen Zustand zumindest teilweise ineinandergeschoben ist. Dadurch kann das zumindest eine vorstehende Element besonders platzsparend vorgesehen sein. Dadurch kann die Handhabungsvorrichtung vorteilhaft kompakt ausgestaltet sein.

Vorzugsweise weist der Druckabschnitt eine variable Druckfläche auf, die dazu ausgestaltet ist, mit einem Stückgut in direkten Kontakt zu kommen. Mit anderen Worten kann eine Druckfläche, mit der die Handhabungsvorrichtung das Zielstückgut verlagern kann, an das Zielstückgut anpassbar ausgestaltet sein. Genauer gesagt ist denkbar, dass die Druckfläche ihre Fläche vergrößern oder verkleinern kann, um sich an das Zielstückgut anzupassen. Damit kann das Zielstückgut optimal verlagert werden, ohne dass es zu Beschädigungen bei dem Zielstückgut kommt. Ferner kann auch bei einer sehr engen Anordnung der Stückgüter auf der Auflagefläche ein einzelnes Stückgut (beispielsweise das Zielstückgut) effizient herausgegriffen und verlagert werden. Die Druckfläche kann beispielsweise durch ein veränderliches Element variiert werden. So ist es denkbar, dass die Druckfläche einen Revolvermechanismus aufweist, mit welchem die Druckfläche variiert werden kann. Somit kann sichergestellt sein, dass die Druckfläche der Handhabungsvorrichtung individuell auf das Zielstückgut angepasst werden kann.

Vorzugsweise ist die Auflagefläche beweglich ausgestaltet. Mit anderen Worten ist es denkbar, dass die Auflagefläche um eine vertikale Achse drehbar ist. Die vertikale Achse kann sich entlang der Schwererichtung erstrecken. Ferner kann die Auflagefläche entlang einer linearen Achse verschoben werden. So können bei einer stationär positionierten Handhabungsvorrichtung die Stückgüter so relativ zu der Handhabungsvorrichtung orientiert und/oder gedreht werden, dass das Zielstückgut effizient verlagert werden kann. Ferner kann so auf eine vorbestimmte Reihenfolge, in welcher die Stückgüter vereinzelt werden sollen, Rücksicht genommen werden. Darüber hinaus kann eine größere Ausdehnung von Stückgütern durch eine einzelne Handhabungsvorrichtung gehandhabt werden. Mit anderen Worten können die Stückgüter in einen Handhabungsbereich der Handhabungsvorrichtung verbracht werden, um dort von der Handhabungsvorrichtung verlagert zu werden. Darüber hinaus können durch eine Drehung der Auflagefläche die Stückgüter, die als nächstes verlagert werden sollen, so zu der Handhabungsvorrichtung ausgerichtet werden, dass diese die Stückgüter verlagern kann.

Vorzugsweise ist die Steuereinheit dazu ausgebildet, zumindest ein Zielstückgut basierend auf einer vorbestimmten Reihenfolge zu handhaben. Mit anderen Worten können die Stückgüter, die von der Handhabungsvorrichtung verlagert werden, durch eine Reihenfolge bestimmt werden, sodass die vereinzelten Stückgüter eine vorbestimmte Reihenfolge aufweisen.

Vorzugsweise weist die Handhabungsvorrichtung eine Rückhaltevorrichtung auf, die dazu ausgestaltet ist, Stückgüter, die nicht verlagert werden sollen, an einer Verlagerung zu hindern. Mit anderen Worten kann die Rückhaltevorrichtung an der Handhabungsvorrichtung vorgesehen sein, um andere Stückgüter, auf welche das Zielstückgut bei einer Verlagerungskräfte ausüben kann, zurückhalten. Die Rückhaltevorrichtung kann dabei Druckkräfte auf andere Stückgüter ausüben, um deren Verlagerung entgegenzuwirken. Damit kann sichergestellt sein, dass nur das Zielstückgut verlagert wird, ohne dass es bei den übrigen Stückgütern zu Verlagerungen kommt. Dadurch kann beispielsweise ein ungewolltes Umstürzen der übrigen Stückgüter verhindert werden. Ferner kann damit verhindert werden, dass Stückgüter, welche nicht verlagert werden sollen, von der Auflagefläche herunterfallen.

Vorzugsweise sind die Rückhaltevorrichtung und der Druckabschnitt relativ zueinander beweglich ausgestaltet. So kann beispielsweise der Druckabschnitt bewegt werden, um die Greifvorrichtung zumindest zu einer Seite hin abzudecken oder abzuschirmen. Der Druckabschnitt kann beispielsweise aus Gummi ausgestaltet sein. Somit kann die Greifvorrichtung, welche vorzugsweise als Vakuumgreifer ausgestaltet ist, geschützt werden. Damit kann verhindert werden, dass die Greifvorrichtung bei einer Bewegung der Handhabungsvorrichtung bei einem Kontakt mit anderen Elementen beschädigt wird. Ferner kann der Druckabschnitt als Anschlag für ein zu greifendes Zielstückgut verwendet werden. Mit anderen Worten kann das Zielstückgut beispielsweise durch die Greifvorrichtung gegriffen werden und bis an den Druckabschnitt herangeführt werden, bis das Zielstückgut mit dem Druckabschnitt in Kontakt ist. Durch den Kontakt zwischen Druckabschnitt und dem Zielstückgut kann eine Position des Zielstückguts definiert sein. Somit kann verhindert werden, dass beispielsweise bei der Ausgestaltung der Greifvorrichtung als Vakuumgreifer ein Stückgut zu weit in den Vakuumgreifer hinein angesaugt wird. Dadurch kann zum einen der Vakuumgreifer geschont werden und zum anderen eine Beschädigung des Zielstückguts vermieden werden. Der Druckabschnitt kann um die Greifvorrichtung herum angeordnet sein. So kann der Druckabschnitt beispielsweise relativ so zu der Greifvorrichtung bewegt werden, dass die Greifvorrichtung durch Stückgüter nicht kontaktiert werden kann. Dadurch kann die Handhabungsvorrichtung dazu genutzt werden, um Stückgüter zu verschieben. So ist es beispielsweise denkbar, dass bei einem dreidimensionalen Haufen aus Stückgütern die Handhabungsvorrichtung, so bewegt wird, um eine obere Schicht von Stückgütern wegzuschieben, um an ein bestimmtes Zielstückgut zu gelangen. Das Zielstückgut kann dann durch eine Greifvorrichtung gegriffen werden und verlagert werden.

Vorzugsweise ist die Handhabungsvorrichtung dazu ausgestaltet, ein Zielstückgut zu verlagern, während ein anderes Zielstückgut von der Handhabungsvorrichtung gehalten ist. Mit anderen Worten kann die Handhabungsvorrichtung ein Zielstückgut beispielsweise ansaugen und dadurch halten und/oder verlagern, während die Handhabungsvorrichtung ein anderes Stückgut verschiebt oder zieht. Dadurch können die einzelnen Bewegungen der Handhabungsvorrichtung effizient genutzt werden, um mehrere Stückgüter gleichzeitig zu verlagern und/oder zu halten. Dadurch kann die Effizienz der Vorrichtung insgesamt erhöht werden. Ferner ist denkbar, dass ein Verlagerungsweg des Zielstückguts so gewählt wird, dass dieser minimiert ist. Dazu kann es notwendig sein, andere Stückgüter aus dem Weg zu schieben. Dadurch kann die Effizienz des Gesamtsystems gesteigert werden, da nicht um andere Stückgüter herumgefahren werden muss, sondern andere Stückgüter weggeschoben werden können, um den kürzesten Weg zu einem gewünschten Ablageort zu erreichen. Ferner ist denkbar, dass die Handhabungsvorrichtung bei der Verlagerung eines ersten Zielstückguts gleichzeitig ein anschließend zu verlagerndes zweites Zielstückgut freilegt, indem Stückgüter während der Verlagerung des ersten Zielstückguts weggeschoben bzw. weggedrückt werden. Dadurch kann jede Bewegung der Handhabungsvorrichtung genutzt werden.

Gemäß einem Aspekt der vorliegenden Erfindung kann das Verlagern (z.B. das Verschieben) grundsätzlich als Wegschieben von einer Handhabungsvorrichtung oder Hinschieben zu einer Handhabungsvorrichtung realisiert sein. In beiden Fällen kann es sich jedoch um ein Schieben handeln, wobei eine Schiebekraft als Druckkraft von einer Seite auf das Stückgut wirkt. Das Schieben kann jedoch auch als Ziehen erfolgen, wobei die Schiebekraft dann als Zugkraft auf das Stückgut wirkt. In allen Fällen ist resultierend jedoch nur eine Kraft für das Verschieben erforderlich, um die Reibung des Stückguts an ihre Auflagefläche zu der Auflagefläche und/oder an andere Stückgüter zu überwinden. Jedoch wird typischerweise keine Kraft benötigt, um das Stückgut entgegen der Schwerkraft anzuheben.

Das optional vorgesehene Erkennungssystem kann nicht nur von oben, sondern auch seitlich auf die Stückgüter (d.h. auf die Auflagefläche) gerichtet sein, um Zielgrößen/Eingangsdaten für die Verlagerung des Zielstückguts zu liefern (d.h. die Stückgutinformation). Eine Reihenfolge, in der das Zielstückgut verlagert wird, kann nicht nur davon abhängig sein, ob das Zielstückgut oben liegt oder besonders leicht zugänglich ist, sondern insbesondere darauf, ob das Zielstückgut an vorderster Stelle seitlich liegt und damit zuerst gehandhabt werden kann, weil für das Herauslösen das Zielstückgut horizontal verschoben werden kann, ohne dabei mit anderen Stückgüter zu kollidieren. Außerdem können zahlreiche weitere Aspekte bei der Verlagerung berücksichtigt werden, wie beispielsweise, ob Stückgüter aufeinander liegen, welche Größe die Stückgüter haben, und ob das Schieben und Ausüben einer Druckkraft hinter sie gegriffen werden kann, denn der erforderliche Freiraum für das Eintauchen und Kontaktieren der Handhabungsvorrichtung neben einem Stückgut vorhanden sein muss. So kann Optimierungspotenzial bereitgestellt sein, um Zielstückgüter oder andere Stückgüter bei ungünstigen Anordnungskonstellationen erst ein Stück beiseite zu schieben, bevor das eigentliche Verlagern des Zielstückguts erfolgt.

Unter der Handhabungsvorrichtung kann eine Verschiebevorrichtung verstanden werden, welche an eine geeignete Stelle an/neben einem Stückgut positioniert wirken kann, um bei seiner anschließenden Verlagerung durch einen Aktor (beispielsweise einen Roboterarm) eine Druckkraft auf das Stückgut auszuüben, um dieses zu verschieben und so aus dem Bulk einer Vielzahl von Stückgütern herauszulösen. Das Schieben kann jedoch auch als Ziehen erfolgen (beispielsweise wie bei einem mit Vakuum beaufschlagten Saugnapf. Es kann im Einzelfall definiert werden, ob ein Schieben oder ein Ziehen verwendet wird, um das Zielstückgut herauszulösen. Dies kann beispielsweise basierend auf der zumindest einen Stückgutinformation erfolgen. Es können also verschiedene Elemente an einer Handhabungsvorrichtung kombiniert werden, also solche, die schieben und solche, die ziehen können, um für alle Anordnungen der Stückgüter den besten Kraftangriff an ein Stückgut und den besten Weg für das Herauslösen realisieren zu können. Ein Schiebeelement (d.h. die Handhabungsvorrichtung) kann im einfachsten Fall eine konstante Geometrie oder Größe aufweisen. Beispielsweise kann die Handhabungsvorrichtung rechenartig ausgestaltet sein. Die Handhabungsvorrichtung kann jedoch in ihrer Form und Größe variabel sein, um je nach Stückgutgröße und zur Verfügung stehenden Stauraum zur Positionierung der Handhabungsvorrichtung optimal eingesetzt werden zu können. So kann beispielsweise mehrere ein- und ausfahrbare Stifte vorgesehen sein, um einen Kontakt mit dem Zielstückgut herzustellen. Die ein- und ausfahrbaren Stifte können in ihrem Ausfahrweg und/oder ihrer Anzahl variiert werden, um einen effizienten Kontakt mit dem Zielstückgut realisieren zu können, ohne dieses zu beschädigen. Die Auflagefläche, auf welcher die Stückgüter aufliegen, kann einen niedrigen Reibwert aufweisen, um die erforderlichen Verschiebekräfte zu minimieren. Vorzugsweise kann die Auflagefläche mit Rollenelementen versehen sein. Beispielsweise kann die Auflagefläche als Kugelteppich ausgeführt sein. Grundsätzlich kann das Verlagern eines Stückguts so erfolgen, dass das Stückgut dann auf einem anderen Transportsystem zum Liegen kommt, um von diesem einzelnen weitertransportiert zu werden.

So kann beispielsweise ein Zielstückgut über die Handhabungsvorrichtung auf einen Sorter aufgeschoben werden. Dabei kann das Zielstückgut nicht angehoben werden. Das Gewicht des Zielstückguts ist daher weniger relevant. Die Verlagerung des Zielstückguts könnte auf einem Blech oder einem Rollentisch stattfinden. Dadurch kann der für einen Einschleusungsvorgang nötige Bauraum verringert werden.

Gemäß einem weiteren Aspekt der vorliegenden Erfindung wird eine Verwendung des obigen Verfahrens und/oder der obigen Vorrichtung bei der Vereinzelung von Stückgütern bereitgestellt.

Einzelne oben genannte Merkmale und Ausführungsformen können mit anderen Merkmalen und anderen Ausführungsformen kombiniert werden und so neue Ausführungsformen bilden. Vorteile und Weiterbildungen, die in Kombination mit den Merkmalen oder Ausführungsformen genannt sind, gelten analog auch für die neuen Ausführungsformen. Ferner gelten Vorteile und Weiterbildungen, die in Zusammenhang mit dem Verfahren genannt sind, auch für die Vorrichtung und andersherum.

Im Folgenden wird die vorliegende Erfindung anhand von Ausführungsbeispielen mit Bezug auf die Figuren im Detail beschrieben.
**Fig. 1** ist eine schematische und perspektivische Ansicht einer Vorrichtung zur Handhabung von zumindest einem Zielstückgut gemäß einer Ausführungsform der vorliegenden Erfindung.
**Fig.** 2 ist eine vergrößerte, schematische und perspektivische Ansicht eines Zielstückguts während einer Verlagerung gemäß einer Ausführungsform der vorliegenden Erfindung.
**Fig.** 3 ist eine schematische Ansicht eines Details einer Handhabungsvorrichtung gemäß einer Ausführungsform der vorliegenden Erfindung.
**Fig.** 4 ist ein schematisches Ablaufdiagramm eines Verfahrens gemäß der Ausführungsform der vorliegenden Erfindung.

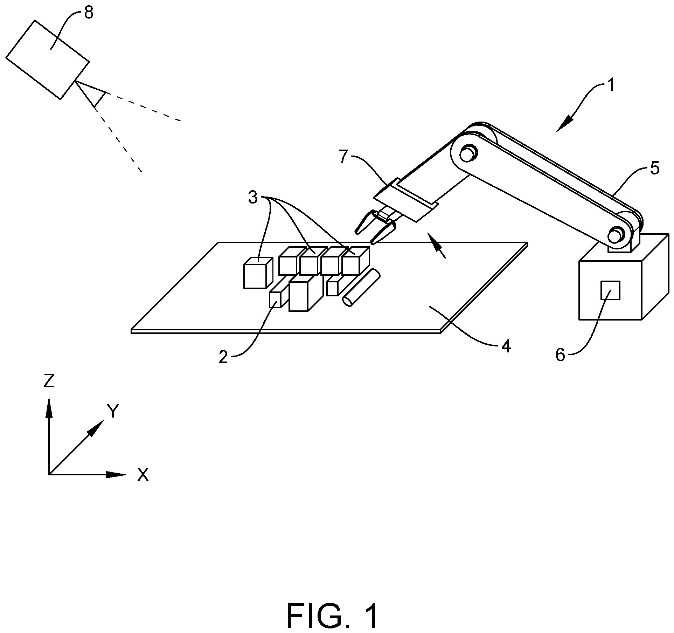

**Fig.** 1 ist eine schematische und perspektivische Ansicht einer Vorrichtung 1 zur Handhabung von zumindest einem Zielstückgut 2. Eine Vielzahl von Stückgütern 2, 3 liegen auf einer Auflagefläche 4 auf. Die Stückgüter können in einer zweidimensionalen oder dreidimensionale Anordnung willkürlich auf der Auflagefläche 4 aufliegen. Daher können die Stückgüter 2, 3 auch übereinander angeordnet sein. Die Stückgüter 2, 3 können beispielsweise in einer geschilderten Anforderungen vorliegen. Die Stückgüter 2, 4 können jegliche Art von Stückgütern sein, insbesondere Postsendungen. Ferner umfasst die Vorrichtung 1 eine Handhabungsvorrichtung 5. Die Handhabungsvorrichtung ist dazu ausgestaltet, ein Zielstückgut 2 zu verlagern. Das Zielstückgut 2 ist eines der Vielzahl von Stückgütern 3. Die Handhabungsvorrichtung hat einen Endeffektor 7, der dazu ausgestaltet ist mit dem Zielstückgut 2 in Kontakt zu gelangen. Die Handhabungsvorrichtung 5 kann das Zielstückgut 2 so verlagern, dass eine Kraft von dem Zielstückgut 2 auf die Handhabungsvorrichtung 5 und auf die Auflagefläche 4 ausgeübt wird. Mit anderen Worten kann das Zielstückgut über die Auflagefläche 4 geschoben werden, ohne dass es nötig ist, das Zielstückgut 2 in der vertikalen Richtung (Z-Richtung) anzuheben. Ferner weist die Vorrichtung 1 der vorliegenden Ausführungsform ein Erkennungssystem 8 auf, das dazu ausgestaltet ist, zumindest eine Stückgutinformation der Stückgüter 2, 3, zu erfassen. Die Stückgutinformation umfasst eine Lage eines Stückgut, eine Anordnung von an das Zielstückgut angrenzender Stückgüter, eine Masse des Zielstückguts, eine Beschaffenheit des Zielstückguts und/oder einen Abstand des Zielstückguts von der Auflagefläche. Dadurch kann, durch die Steuereinheit 6 entschieden werden, welches Stückgut von der Handhabungsvorrichtung 5 gegriffen wird, um verlagert zu werden.

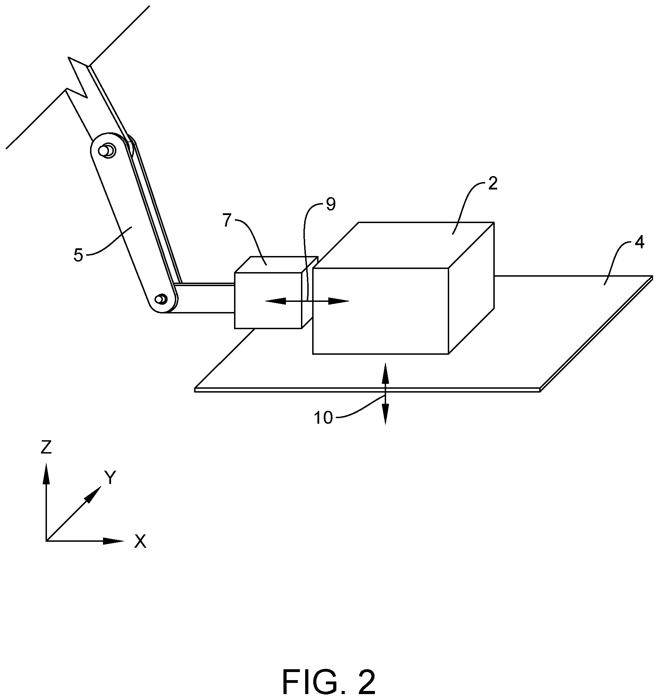

**Fig. 2** ist eine schematische und perspektivische Ansicht eines Zielstückguts 2, welches durch eine Handhabungsvorrichtung 5 über die Auflagefläche 4 bewegt wird. Dabei ist zu erkennen, dass das Zielstückgut eine erste Kraft 9 auf die Handhabungsvorrichtung (genauer gesagt auf den Endeffektor 7) ausübt und eine zweite Kraft 10 auf die Auflagefläche 4 ausgeübt. Durch die erste Kraft 9 wird das Zielstückgut 2 über die Auflagefläche 4 geschoben. Die zweite Kraft 10 ist eine Gewichtskraft des Zielstückguts, welche in die Auflagefläche 4 eingeleitet wird.

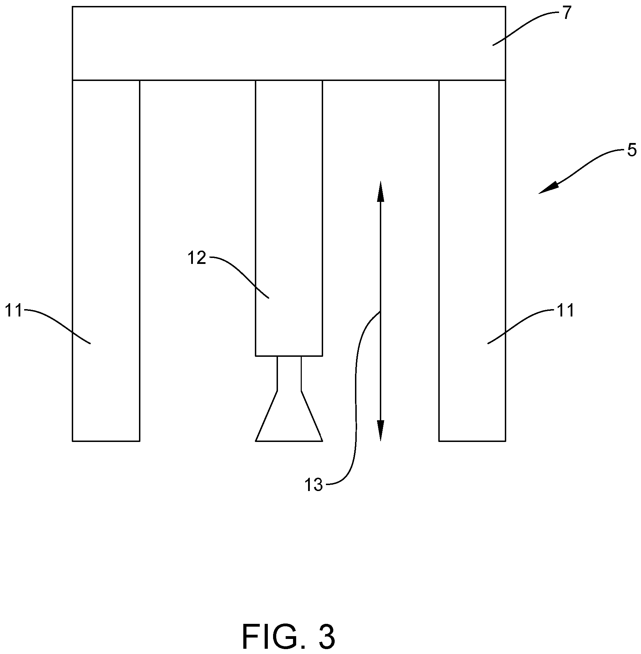

**Fig. 3** ist eine schematische Ansicht eines Details der Handhabungsvorrichtung 5. Genauer gesagt ist in Fig. 3 der Endeffektor 7 im Detail dargestellt. Der Endeffektor 7 weist bei der vorliegenden Ausführungsform eine Greifvorrichtung 12 sowie Druckabschnitte 11 jeweils angrenzend an die Greifvorrichtung 12 auf. Die Greifvorrichtung der vorliegenden Ausführungsform ist als Sauggreifer ausgestaltet. Die Druckabschnitte 11, die jeweils links und rechts in Fig. 3 neben dem Greifabschnitt 12 angeordnet sind, sind dazu ausgestaltet, ein Zielstückgut 2 zu verschieben. Ferner kann mit dem Druckabschnitt 11 auch andere Stückgüter aus dem Weg geräumt (d.h. verschoben) werden. Ferner können die Druckabschnitte 11 auch als Rückhaltevorrichtung dienen. Damit kann also ein nicht zu bewegendes Stückgut zurückgehalten werden, solange ein Zielstückgut 2 verlagert wird. In einer weiteren nicht dargestellten Ausführungsform ist die Rückhaltevorrichtung als separates Bauteil an dem Endeffektor 7 der Handhabungsvorrichtung 5 angeordnet. Bei der vorliegenden Ausführungsform können die Druckabschnitte 11 relativ zueinander und relativ zu der Greifvorrichtung 12 bewegt werden. Genauer gesagt, können die Druckabschnitte in der Richtung 13 hin und her bewegt werden. Dadurch kann die Greifvorrichtung 12 freigelegt werden oder so von den Druckabschnitten geschützt werden, dass die Greifvorrichtung nicht exponiert ist. Dadurch kann die Greifvorrichtung geschützt werden.

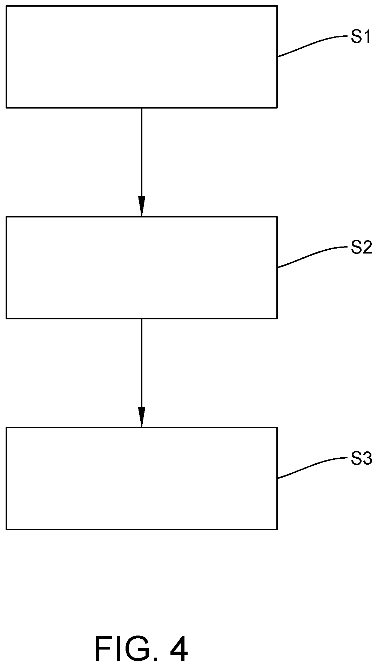

**Fig.** 4 ist ein schematisches Ablaufdiagramm, dass den Ablauf eines Verfahrens gemäß einer Ausführungsform der vorliegenden Erfindung zeigt. In Schritt S1 wird zumindest eine Stückgutinformation des Zielstückguts erfasst oder erlangt. Dadurch können Eigenschaften eines potentiellen Zielstückguts erfasst werden. In Schritt S2 kann dann das zumindest eine Zielstückgut identifiziert werden, basierend auf der zumindest einen Stückgutinformation. Ist das zumindest eine Zielstückgut 2 identifiziert, kann in Schritt S3, das zumindest eine Zielstückgut verlagert werden, wie es oben beschrieben wurde. Die Verlagerung kann, basierend auf der zumindest einen Stückgutinformation ausgeführt werden.

### Bezugszeichenliste:

- 1: Vorrichtung
- 2: Zielstückgut
- 3: Stückgut
- 4: Auflagefläche
- 5: Handhabungsvorrichtung
- 6: Steuereinheit
- 7: Endeffektor
- 8: Erkennungssystem
- 9: erste Kraft
- 10: zweite Kraft
- 11: Druckabschnitte
- 12: Greifvorrichtung
- 13: Richtung

## Patentansprüche

1. Verfahren zur Handhabung von zumindest einem Zielstückgut (2), insbesondere bei einer Vereinzelung des zumindest einen Zielstückguts (2) aus einer Vielzahl von Stückgütern (2, 3), wobei das zumindest eine Zielstückgut (2) direkt oder indirekt auf einer Auflagefläche (4) aufliegt, umfassend:
Verlagern des zumindest einen Zielstückguts (2) mittels einer Handhabungsvorrichtung (5),
wobei bei dem Verlagern eine Kraft (9, 10) zwischen dem Zielstückgut (2) und der Handhabungsvorrichtung (5) sowie eine Kraft (9, 10) zwischen dem Zielstückgut (2) und der Auflagefläche (4) wirkt.

2. Verfahren gemäß Anspruch 1, wobei das Verfahren ferner umfasst Erfassen oder Erlangen von zumindest einer Stückgutinformation des Zielstückguts (2).

3. Verfahren gemäß Anspruch 2, wobei die zumindest eine Stückgutinformation eine Form des Zielstückguts (2), eine Lage des Zielstückguts (2), eine Anordnung von an das Zielstückgut (2) angrenzender Stückgüter, eine Masse des Zielstückguts (2), eine Beschaffenheit des Zielstückguts (2) und/oder einen Abstand des Zielstückguts (2) von der Auflagefläche (4) umfasst.

4. Verfahren gemäß Anspruch 2 oder 3, wobei wird die Verlagerung basierend auf der zumindest einen Stückgutinformation ausgeführt wird.

5. Verfahren gemäß einem der vorhergehenden Ansprüche, wobei das Identifizieren des Zielstückguts (2) basierend auf einer Position und/oder Orientierung des Zielstückguts (2) auf der Auflagefläche (4) durchgeführt wird.

6. Verfahren gemäß einem der vorhergehenden Ansprüche, wobei das Verfahren ferner ein Freilegen des Zielstückguts (2) aus der Vielzahl von Stückgütern (2,3) umfasst.

7. Verfahren gemäß einem der vorhergehenden Ansprüche wobei das zumindest eine Zielstückgut (2) während der Verlagerung zumindest in indirektem Kontakt mit der Auflagefläche (4) ist.

8. Verfahren gemäß einem der vorhergehenden Ansprüche, wobei das zumindest eine Zielstückgut (2) während der Verlagerung durch einen Reibschluss und/oder einen Formschluss gehalten ist.

9. Verfahren gemäß einem der vorhergehenden Ansprüche, wobei das Zielstückgut (2) während der Verlagerung durch eine mechanische oder pneumatische Kraft (9, 10) gehalten wird.

10. Vorrichtung (1) zur Handhabung von zumindest einem Zielstückgut (2), insbesondere bei einer Vereinzelung des zumindest einen Zielstückguts (2) aus einer Vielzahl von Stückgütern (2, 3), wobei das zumindest eine Zielstückgut (2) direkt oder indirekt auf einer Auflagefläche (4) aufliegt, umfassend:
eine Handhabungsvorrichtung (5), die dazu ausgestaltet ist, ein Stückgut (3) zu verlagern,
eine Steuereinheit (6), die dazu ausgestaltet ist, die Handhabungsvorrichtung (5) so zu steuern, dass das Zielstückgut (2) so verlagert wird, dass eine Kraft (9, 10) zwischen dem Zielstückgut (2) und der Handhabungsvorrichtung (5) sowie eine Kraft (9, 10) zwischen dem Zielstückgut (2) und der Auflagefläche (4) wirkt.

11. Vorrichtung (1) gemäß Anspruch 10, wobei die Handhabungsvorrichtung (5) zumindest eine Greifvorrichtung (12), insbesondere einen Saugnapf, umfasst

12. Vorrichtung (1) gemäß Anspruch 10 oder 11, wobei die Handhabungsvorrichtung (5) zumindest ein vorstehendes Element umfasst, das mit dem Stückgut (3) in Kontakt gelangen kann.

13. Vorrichtung (1) gemäß Anspruch 12 kann jedes vorstehende Element teleskopartig bewegt werden.

14. Vorrichtung (1) gemäß einem der Ansprüche 10 bis 13, wobei die Auflagefläche (4) beweglich ausgestaltet ist.

15. Vorrichtung (1) gemäß einem der Ansprüche 10 bis 14, wobei die Handhabungsvorrichtung (5) eine Rückhaltevorrichtung aufweist, die dazu ausgestaltet ist, Stückgüter (2, 3), die nicht verlagert werden sollen, an einer Verlagerung zu hindern.
